# FASCICULE DE BREVET EUROPEEN

(11) **EP 2 578 496 B1**
(45) Date de publication et mention de la délivrance du brevet: **06.07.2016**
(21) Numéro de dépôt: 12306186.3
(22) Date de dépôt: 28.09.2012
(51) Int. Cl.: B64D 33/02, B64D 15/04, F02C 7/045, F02C 7/047, F01D 25/24, F02C 7/24

(54) **Panneau pour le traitement acoustique intégrant des canaux d'air chaud et au moins un canal annulaire**
Paneel mit Geräuschdämmung, welches Heißluftkanäle und mindestens einen Ringkanal umfasst
Acoustic treatment panel including hot-air channels and at least one annular channel

(30) Priorité: 03.10.2011 FR 1158896
(43) Date de publication de la demande: 10.04.2013
(73) Titulaire: Airbus Opérations SAS, 31060 Toulouse (FR)
(72) Inventeur: Porte, Alain, 31770 Colomiers (FR); Chelin, Frédéric, 32430 Encausse (FR); Albet, Grégory, 31190 Grepiac (FR)
(74) Mandataire: Fantin, Laurent

(56) Documents cités:
- EP-A1- 1 232 944
- FR-A1- 2 917 067
- FR-A1- 2 941 675
- US-A1- 2010 276 548

## Description

La présente invention se rapporte à un panneau pour le traitement acoustique intégrant des canaux d'air chaud et au moins un canal annulaire.

Un ensemble propulsif d'aéronef comprend une nacelle dans laquelle est disposée de manière sensiblement concentrique une motorisation.

Le document FR 2917067 est considéré l'état de la technique le plus proche.

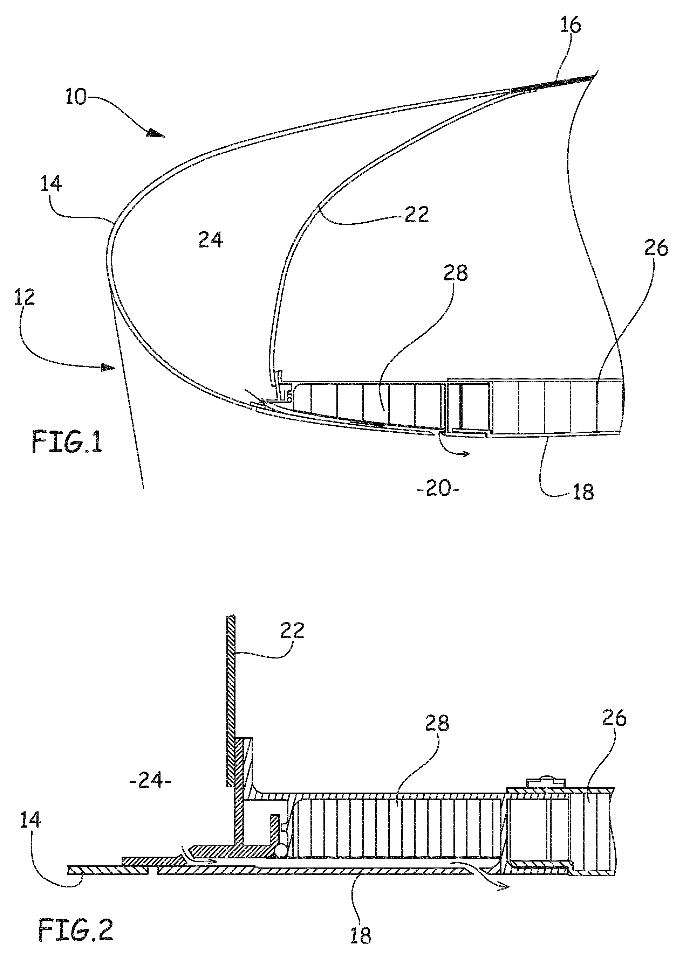

Comme illustré sur la figure 1, une nacelle 10 comprend à l'avant une entrée d'air 12 permettant de canaliser un flux d'air en direction de la motorisation. Selon une coupe longitudinale (contenant l'axe de rotation de la motorisation), une entrée d'air 12 comprend une lèvre 14 prolongée à l'extérieur de la nacelle par une paroi extérieure 16 et à l'intérieur par la paroi intérieure 18 définissant un conduit intérieur 20 permettant de canaliser l'air en direction de la motorisation.

La nacelle comprend également un cadre avant 22 qui délimite avec la lèvre 14 un conduit annulaire 24 qui peut être utilisé pour canaliser de l'air chaud pour le traitement du givre.

Pour limiter l'impact des nuisances sonores, des techniques ont été développées pour réduire le bruit interne, notamment en disposant, au niveau des parois du conduit intérieur 20, des panneaux ou revêtements visant à absorber une partie de l'énergie sonore, notamment en utilisant le principe des résonateurs d'Helmholtz.

Pour optimiser le traitement acoustique, ces panneaux doivent recouvrir la plus grande surface. Certains panneaux 26 pour le traitement acoustique peuvent recouvrir le conduit intérieur 20, ces derniers distants du cadre avant ne comportant pas la fonction du traitement du givre. D'autres peuvent être disposés dans le conduit annulaire 24 à l'avant du cadre 22 et combiner les fonctions du traitement acoustique et du traitement du givre. Enfin, un panneau 28 pour le traitement acoustique avec des matériaux résistants à la chaleur peut être intercalé entre le cadre avant 22 et les panneaux 26. Ce panneau 28 intègre également la fonction du traitement du givre et comprend des moyens pour capter l'air chaud dans le conduit annulaire 24 et le rejeter à l'arrière dans le conduit intérieur 20.

Un tel panneau combinant les fonctions du traitement acoustique et du traitement du givre est notamment décrit dans le brevet FR-2.917.067. Il comprend de l'extérieur vers l'intérieur une couche acoustiquement résistive, au moins une structure alvéolaire et une couche réflectrice, ainsi que des canaux délimités chacun par une paroi intercalée entre la couche acoustiquement résistive et la structure alvéolaire.

Cette solution permet de limiter les risques de communication entre l'intérieur des canaux et les cellules de la structure alvéolaire, et donc les risques de perturbation du traitement acoustique.

Selon un autre avantage, l'air chaud occupe un volume nettement inférieur par rapport aux solutions antérieures selon lesquelles il occupe le volume de certaines cellules de la structure alvéolaire, ce qui permet d'obtenir d'une part une meilleure concentration de l'air chaud contre la paroi à dégivrer renforçant l'efficacité du dégivrage, et d'autre part, une pression pneumatique plus élevée limitant le risque d'une pression à l'intérieur de la structure inférieure à celle de l'extérieur et donc la pénétration de l'air extérieur à l'intérieur du système de dégivrage.

Selon un autre avantage, l'air chaud est en contact permanent avec la peau à dégivrer, ce qui permet d'améliorer les échanges et de réduire la température de l'air chaud refoulé en sortie du système de dégivrage, ce qui permet de le rejeter sans risque de brûlures de la paroi traversée, notamment lorsque cette dernière est réalisée en un matériau sensible à la chaleur tel que le composite. En général chaque canal prévu pour canaliser l'air chaud communique à une première extrémité avec le conduit annulaire et débouche via un orifice de sortie dans le conduit intérieur 20. Ces canaux s'étendent selon la direction longitudinale et sont répartis sur toute la circonférence du conduit intérieur 20. Au niveau du conduit annulaire 24, l'air chaud est injecté généralement en un point de la circonférence et circule dans le conduit annulaire, en y faisant plusieurs tours. Des moyens sont prévus pour homogénéiser la température de l'air à l'intérieur du conduit annulaire. Pour assurer le transfert de l'air chaud depuis le conduit annulaire vers les canaux, il est nécessaire de prévoir une pièce intercalaire qui assure la fonction de jonction entre la paroi délimitant la lèvre, le cadre avant et le panneau pour le traitement acoustique 28. Cette pièce comprend des canaux pour permettre de canaliser l'air chaud depuis le conduit annulaire vers les canaux du panneau acoustique. Cette pièce intercalaire et son montage sont relativement complexes car il est nécessaire que les conduits présents au niveau de cette pièce soient alignés avec les conduits du panneau pour le traitement acoustique. Selon un mode de réalisation, cette pièce se présente sous la forme d'une plaque avec des sillons au niveau de sa face en regard de la couche acoustiquement résistive qui délimitent chacun un conduit. Selon une autre contrainte, il est nécessaire de réduire la superficie des surfaces non traitées sur le plan acoustique pour optimiser le traitement acoustique.

Aussi, la présente invention vise à pallier les inconvénients de l'art antérieur en proposant un panneau pour le traitement acoustique intégrant des canaux pour la fonction du traitement du givre, avec un canal annulaire pour canaliser l'air chaud en direction des canaux permettant d'en simplifier la conception.

A cet effet, l'invention a pour objet une nacelle d'aéronef comprenant une lèvre prolongée par un conduit intérieur formant une entrée d'air, un cadre avant délimitant avec ladite lèvre un conduit annulaire dans lequel circule de l'air chaud ainsi qu'un panneau pour le traitement acoustique comportant de l'extérieur vers l'intérieur une couche acoustiquement résistive, au moins une structure alvéolaire et une couche réflectrice ainsi que des canaux permettant de canaliser de l'air chaud avec chacun une entrée communiquant avec le conduit annulaire et une sortie communiquant avec le conduit intérieur, caractérisée en ce que le panneau pour le traitement acoustique comprend, en amont des canaux, un canal annulaire qui s'étend sur au moins une partie de la circonférence de la nacelle, au moins un conduit assurant la communication entre ledit canal annulaire et le conduit annulaire en amont et plusieurs canaux débouchant dans ledit canal annulaire en aval, le panneau pour le traitement acoustique étant relié au cadre avant au droit du canal annulaire.

D'autres caractéristiques et avantages ressortiront de la description qui va suivre de l'invention, description donnée à titre d'exemple uniquement, en regard des dessins annexés sur lesquels :
- la figure 1 est une coupe longitudinale d'une partie d'une entrée d'air selon l'art antérieur,
- la figure 2 est une coupe illustrant en détails un panneau pour le traitement acoustique selon l'art antérieur,
- la figure 3 est une coupe d'une partie d'une entrée d'air selon l'invention,
- la figure 4A est une coupe longitudinale selon un premier plan de coupe d'un panneau pour le traitement acoustique selon l'invention,
- la figure 4B est une coupe longitudinale selon un deuxième plan de coupe d'un panneau pour le traitement acoustique selon l'invention,
- la figure 5 est une coupe transversale selon un premier plan de coupe d'un panneau pour le traitement acoustique selon l'invention,
- la figure 6 est une coupe transversale selon un deuxième plan de coupe d'un panneau pour le traitement acoustique selon l'invention,
- la figure 7A est une coupe longitudinale illustrant en détails une chambre de stabilisation disposée à l'arrière du panneau pour le traitement acoustique selon l'invention,
- la figure 7B est un schéma illustrant la répartition selon la circonférence des canaux d'air chaud et des sorties du panneau pour le traitement acoustique selon l'invention,
- la figure 8 est une coupe longitudinale illustrant en détails un mode de réalisation d'une chambre de stabilisation prévue à l'avant d'un panneau pour le traitement acoustique,
- la figure 9 est une coupe transversale d'un mode de réalisation des entrées des canaux d'un panneau pour le traitement acoustique de l'invention,
- la figure 10 est une vue depuis l'intérieur du conduit annulaire d'un autre mode de réalisation des entrées des canaux d'un panneau pour le traitement acoustique de l'invention,
- la figure 11 est une coupe transversale du mode de réalisation illustré sur la figure 10,
- la figure 12 est une coupe longitudinale d'un autre mode de réalisation des entrées des canaux d'un panneau pour le traitement acoustique de l'invention,
- la figure 13 est une coupe selon la circonférence des entrées des canaux illustrées sur la figure 12, et
- la figure 14 est une coupe selon la circonférence d'une variante du mode de réalisation illustré sur la figure 13.

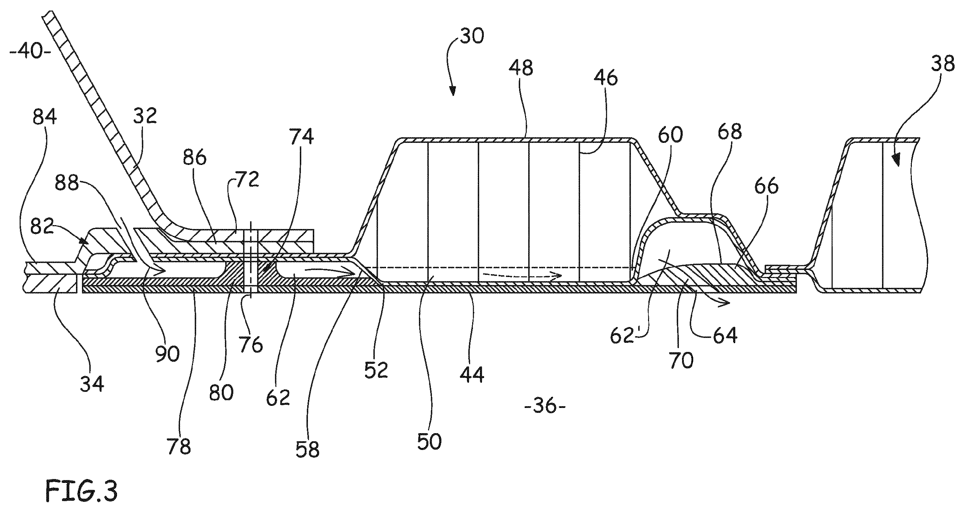

Sur la figure 3, on a illustré un panneau 30 pour le traitement acoustique disposé à l'arrière d'un cadre avant 32 d'une entrée d'air dont une partie de la lèvre 34 et l'avant du conduit intérieur 36 sont représentés. Avantageusement, à l'arrière du panneau 30, le conduit intérieur 36 est délimité par un panneau pour le traitement acoustique 38 sans traitement du givre généralement en matériau composite.

Pour la suite de la description, un plan longitudinal est un plan contenant l'axe longitudinal correspondant approximativement à l'axe de rotation de la motorisation. Un plan transversal est un plan perpendiculaire à l'axe longitudinal. De plus, l'avant du panneau 30 correspond à la partie du panneau orientée vers la lèvre alors que l'arrière du panneau 30 correspond à la partie orientée vers la sortie de la nacelle.

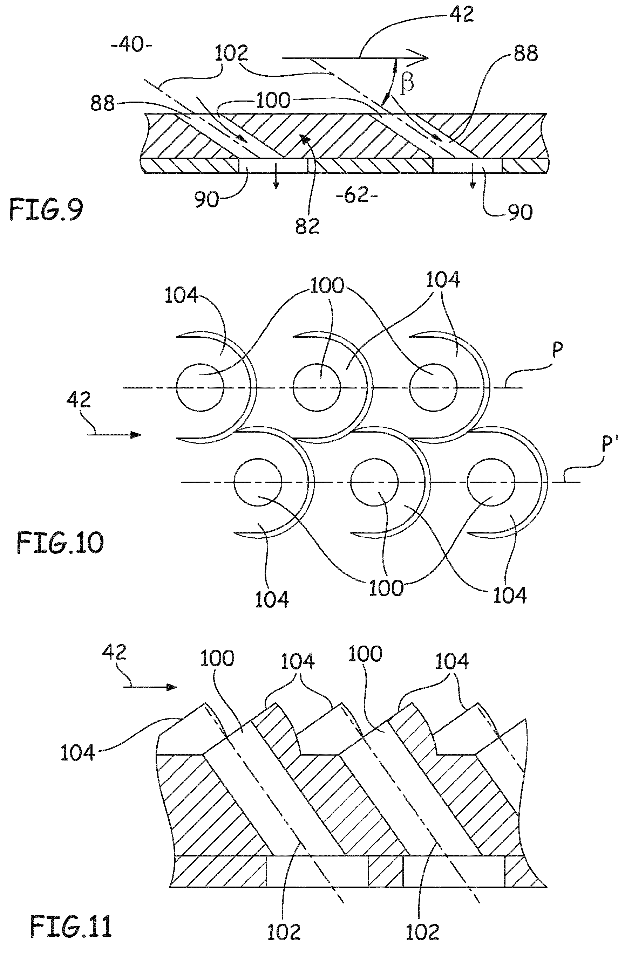

Selon l'invention, pour assurer le traitement du givre, de l'air chaud est injecté dans un conduit annulaire 40 délimité par la lèvre 34 et le cadre avant 32. L'air chaud s'écoule dans le conduit annulaire en effectuant approximativement un mouvement de rotation autour de l'axe longitudinal, selon un sens matérialisé par les flèches 42 sur les figures 9, 10, 11, 13 et 14.

Pour la suite de la description, le panneau pour le traitement acoustique 38, le cadre avant, la lèvre, les moyens pour injecter l'air chaud dans le conduit annulaire ne sont pas plus détaillés car ils sont connus de l'homme du métier.

De manière connue, le panneau pour le traitement acoustique 30 comprend de l'extérieur vers l'intérieur une couche acoustiquement résistive 44, au moins une structure alvéolaire 46 et une couche réflectrice 48 et des canaux 50 qui s'étendent depuis l'avant du panneau jusqu'à l'arrière du panneau. Avantageusement, les canaux 50 sont délimités par au moins une paroi intercalée entre la couche acoustiquement résistive 44 et la structure alvéolaire 46.

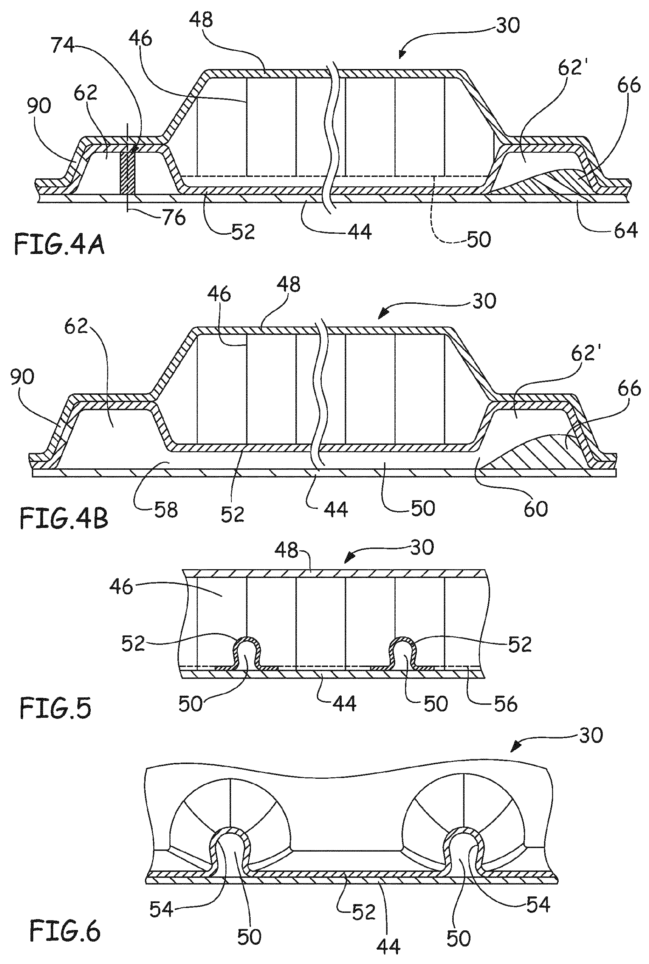

Selon un mode de réalisation, les canaux 50 sont réalisés comme décrits dans le document FR-2.917.067. Néanmoins, l'invention n'est pas limitée au mode de réalisation illustré dans ce document. Ainsi, une paroi 52 peut être mise en forme avec des sillons 54 de manière à délimiter une fois plaquée contre la couche acoustiquement résistive 44 les canaux 50. Cette paroi 52 peut comprendre des évidements 56 entre les canaux 50 pour réduire l'épaisseur de matière traverser par les ondes acoustiques, comme illustré sur la figure 5.

La mise en forme de la paroi 52, l'assemblage de la couche acoustiquement résistive 44 et de la paroi 52, le mode de réalisation des évidements 56 et l'assemblage de la structure alvéolaire et de la couche réflectrice ne sont pas plus détaillés car différentes solutions techniques peuvent être envisagées. Selon un mode de réalisation, les canaux 50 s'étendent approximativement selon la direction longitudinale. En variante, les canaux 50 pourraient avoir une forme d'hélice.

Chaque canal 50 comprend une entrée 58 reliée au conduit annulaire 40 et une sortie 60 reliée au conduit intérieur 36. Selon l'invention, le panneau comprend en amont des canaux 50 un canal annulaire 62 qui s'étend sur au moins une partie de la circonférence de la nacelle, au moins un conduit assurant la communication entre ledit canal annulaire 62 et le conduit annulaire 40 en amont et plusieurs canaux 50 débouchant dans ledit canal annulaire 62 en aval. Le fait de prévoir un canal annulaire permet de simplifier la conception dans la mesure où le ou les conduits qui communiquent avec le conduit annulaire 40 ne sont pas nécessairement alignés avec les canaux 50.

De préférence, les entrées 58 et/ou les sorties 60 des canaux 50 débouchent dans la ou les canaux annulaires 62, 62' avec une forme évasée. Avantageusement, le canal annulaire 62 s'étend sur toute la périphérie de la nacelle.

De préférence, ledit canal annulaire 62 a une section supérieure à celle des canaux 50 de manière à homogénéiser le traitement du givre sur la circonférence du conduit intérieur 36.

Pour assurer un brassage satisfaisant et réduire les disparités de température et/ou de pression le long de la circonférence, le conduit annulaire 62, également appelé chambre de stabilisation, a une section supérieure ou égale à 1,5 fois la section d'un canal 50. De préférence, le canal annulaire 62 a une hauteur supérieure ou égale au double de la hauteur d'un canal 50. De préférence, le canal annulaire a une section trapézoïdale dans un plan longitudinal, la grande base étant orientée vers la couche acoustiquement résistive 44.

Avantageusement, le canal annulaire 62 comprend plusieurs entrées reliées au conduit annulaire 40 et plusieurs sorties reliées aux canaux 50 et les entrées et les sorties ne sont pas alignées selon la direction longitudinale mais décalées selon la circonférence. Cet agencement contribue à obtenir un meilleur brassage de l'air chaud et à homogénéiser sa température ou sa pression avant qu'il ne traverse les canaux 50.

De préférence, on peut prévoir un canal annulaire 62 en amont des canaux 50 et/ou un canal annulaire 62' en aval des canaux 50.

Selon un mode de réalisation, chaque canal annulaire 62, 62' est délimité par une paroi et la couche acoustiquement résistive 44.

Avantageusement, les canaux annulaires 62, 62' et les canaux 50 sont délimités par la même paroi 52. Cette paroi est mise en forme par tous moyens appropriés, notamment par formage.

Selon un mode de réalisation, la paroi 52 est en contact avec la couche acoustiquement résistive 44 en amont du canal annulaire 62 disposé en amont des canaux 50 et en aval du canal annulaire 62' disposé en aval des canaux 50. En complément, la couche réflectrice 48 est plaquée contre la paroi 52 au niveau des canaux annulaires 62, 62'.

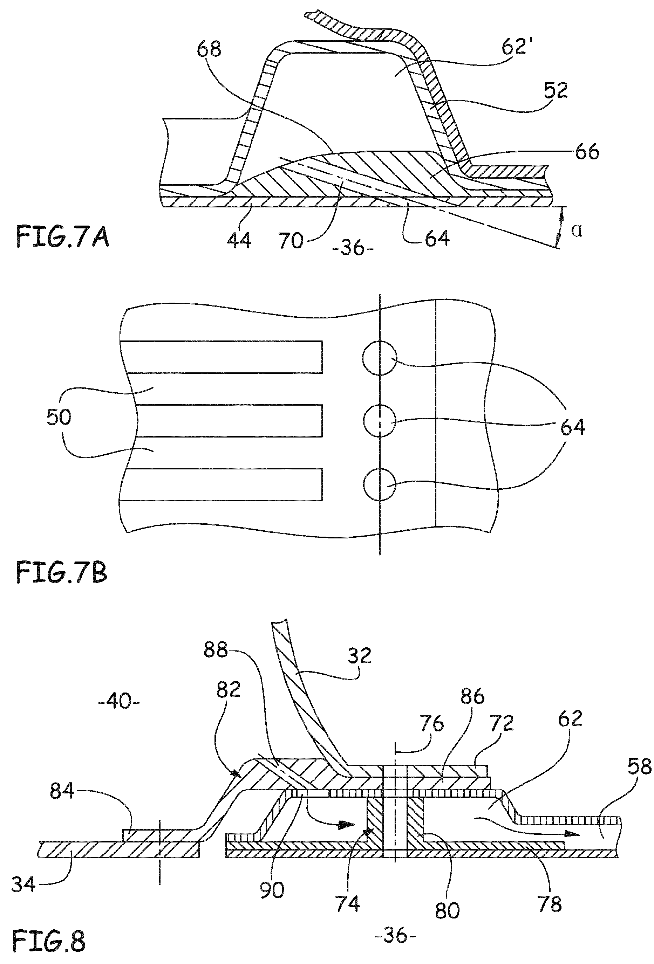

Au niveau du canal annulaire 62' prévu en aval des canaux 50, la couche acoustiquement résistive 44 comprend des orifices 64. Comme illustré sur la figure 7B, pour assurer une meilleure homogénéisation de la température, les orifices de sortie 64 ne sont pas alignés avec les canaux 50 mais décalés. De préférence, un orifice de sortie 64 est disposé entre deux zones situées dans le prolongement de canaux adjacents.

Avantageusement, le canal annulaire 62' comprend des moyens pour permettre d'incliner le flux d'air sortant des orifices de sortie 64 et limiter ainsi les perturbations du flux d'air circulant dans le conduit intérieur 36. A cet effet, le panneau comprend une cale 66 plaquée contre la surface intérieure de la couche acoustiquement résistive 44 et dont la surface supérieure 68 délimite avec la paroi 52 le canal annulaire 62'. Cette cale 66 comprend pour chaque orifice de sortie 64 un conduit 70 permettant de faire communiquer le canal annulaire 62' avec l'orifice de sortie 64 correspondant. Avantageusement, chaque conduit 70 forme un angle a inférieur à 50° avec la surface extérieure de la couche acoustiquement résistive située après l'orifice de sortie correspondant.

Pour faciliter l'écoulement de l'air, la surface supérieur 68 de la cale 66 comprend en amont une forme en biseau au niveau de laquelle débouchent les conduits 70.

Pour simplifier le circuit d'air et réduire au maximum les surfaces non traitées sur le plan acoustique, le panneau acoustique selon l'invention est relié au cadre avant au niveau du canal annulaire 62.

A cet effet, le cadre avant 32 comprend un bord 72 recourbé vers l'arrière plaqué conte la surface intérieure de la couche réflectrice 48, elle-même plaquée contre la paroi 52 au droit du canal annulaire 62 disposé en amont des canaux 50. Pour limiter les risques d'écrasement du canal annulaire 62, au moins une cale 74 est disposée dans le canal annulaire 62 au droit de chaque moyen 76 assurant la liaison entre le cadre avant 32 et le panneau pour le traitement acoustique 30 selon l'invention. Dans un plan transversal, les cales 74 sont espacées le long de la circonférence de manière à permettre le passage de l'air chaud entre le conduit annulaire 40 et les canaux 50.

Selon un mode de réalisation simplifié, chaque cale 74 se présente sous la forme d'un tube dont l'axe est aligné avec celui du moyen de liaison 76, sa hauteur étant égale à la hauteur du canal annulaire 62.

En variante, pour simplifier l'assemblage, le panneau peut comprendre au niveau du canal annulaire 62 disposé en amont des canaux 50 une bande de matière 78 qui s'étend sur au moins une partie de la circonférence, plaquée contre la couche acoustiquement résistive 44 et comportant pour chaque moyen de liaison 76 un bossage 80 sous forme d'un cylindre creux assurant la fonction de cale 74. Ainsi, selon ce mode de réalisation, plusieurs cales 74 sont reliées par la bande de matière 78.

De préférence, le panneau pour le traitement acoustique 30 est relié à la paroi délimitant la lèvre 34.

A cet effet, une pièce annulaire 82 assure la liaison entre d'une part la paroi délimitant la lèvre 34, et d'autre part, le panneau acoustique 30 et avantageusement le cadre avant 32.

Selon les cas, la pièce annulaire 82 peut être d'un seul tenant et s'étendre sur toute la périphérie de la nacelle ou être obtenue à partir d'un assemblage de plusieurs secteurs angulaires.

Selon un mode de réalisation illustré notamment sur la figure 8, la pièce annulaire 82 comprend à une première extrémité une première partie 84 sous forme d'une bande annulaire plaquée et fixée contre la surface intérieure de la paroi formant la lèvre 34, et à l'autre extrémité, une seconde partie 86 sous forme d'une bande intercalée entre le bord recourbé 72 du cadre avant 32 et la paroi délimitant le canal annulaire 62 du panneau acoustique 30, la seconde partie 86 étant décalée radialement vers l'extérieur par rapport à la première partie 84 de manière à ce que la surface extérieure du panneau acoustique 30 soit dans le prolongement de la surface extérieure de la paroi délimitant la lèvre 34.

Cette pièce annulaire 82 comprend plusieurs conduits 88 permettant de faire communiquer le conduit annulaire 40 avec les entrées 90 du canal annulaire 62 situé en amont du panneau acoustique 30.

Quel que soit le panneau pour le traitement acoustique 30, l'entrée d'air comprend au moins un conduit permettant de canaliser l'air chaud depuis le conduit annulaire 40 jusqu'au panneau pour le traitement acoustique 30.

Selon une première variante, illustré sur les figures 8 à 11, la pièce annulaire 82 précédemment décrite comprend des conduits 88.

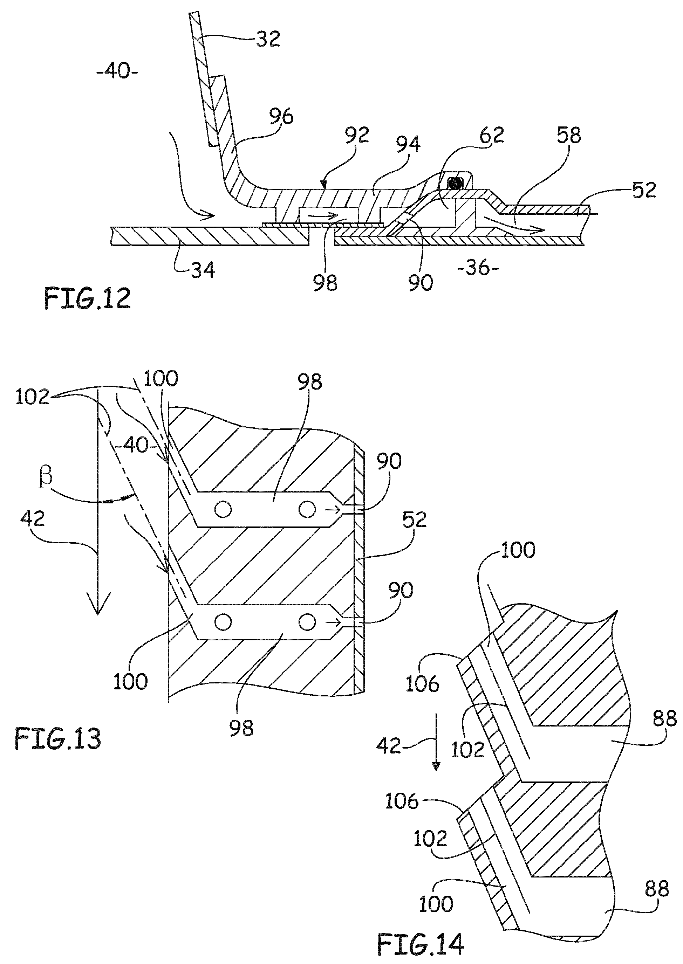

Selon une autre variante, illustrée sur les figures 12 et 14, une pièce intercalaire 92 peut assurer la jonction entre le cadre avant 32, la paroi délimitant la lèvre 34 et le panneau acoustique 30. Cette pièce intercalaire 92 comprend un corps annulaire 94 avec à l'avant une plaque recourbée 96 susceptible d'être plaquée et fixée contre la face arrière du cadre avant 32. Selon cette variante, la paroi délimitant la lèvre 34 et l'extrémité avant du panneau acoustique sont plaquées et fixées à la face intérieure (celle orientée vers l'axe longitudinal de la nacelle) par tous moyens appropriés. Le corps annulaire 94 comprend au niveau de sa face intérieure des formes en creux qui délimitent des conduits 98.

Cependant, l'invention n'est pas limitée à ces deux variantes pour les conduits susceptibles d'acheminer l'air chaud depuis le conduit annulaire vers le panneau pour le traitement acoustique. Ainsi, d'autres formes de conduits ou d'autres solutions pour délimiter un conduit pourraient être envisagées.

Chaque conduit d'alimentation 88 et 98 comprend une portion dite embouchure 100 qui débouche dans le conduit annulaire 40.

Selon l'invention, l'embouchure 100 permet de canaliser l'air chaud selon une direction référencée 102 qui forme un angle β inférieur à 60° avec la direction 42 d'écoulement de l'air chaud dans le conduit annulaire. Cet agencement assure de capter un plus grand débit d'air chaud.

Selon des variantes illustrées notamment sur les figures 9 à 11, les conduits 88 ont une embouchure 100 dont la direction 102 est contenue dans un plan perpendiculaire à l'axe longitudinal de la nacelle.

Selon une première variante illustrée sur la figure 9, les embouchures 100 sont disposées dans un même plan transversal.

Selon une autre variante illustrée sur les figures 10 et 11, les embouchures 100 sont disposées dans au moins deux plans transversaux P, P'. De préférence, les embouchures 100 sont réparties sur deux plans P, P' et disposées en quinconce. Selon un mode de réalisation préférentiel, les embouchures 100 débouchent au niveau de surfaces 104 sécantes avec la direction 42 d'écoulement de l'air chaud dans le conduit annulaire. Avantageusement, les surfaces 104 sont perpendiculaires à la direction 102 des conduits.

Selon d'autres variantes illustrées notamment sur les figures 13 et 14, les conduits 98 ont une embouchure 100 dont la direction 102 est sécante avec le plan perpendiculaire à l'axe longitudinal de la nacelle et sensiblement tangente à la circonférence du conduit interne de la nacelle. Dans ce cas, les embouchures 100 sont disposées au niveau de la surface intérieure de la paroi délimitant la lèvre 34. Selon un mode de réalisation, pour former les conduits, une pièce est plaquée contre la face intérieure de la paroi délimitant la lèvre 34, ladite pièce comportant des rainures qui délimitent chacune un conduit. La paroi délimitant la lèvre 34 étant courbe, une composante de la direction 102 de l'embouchure 100 des conduits est orientée vers l'axe longitudinale de la nacelle. Selon un mode de réalisation illustré sur la figure 13, les embouchures 100 sont disposées dans un plan parallèle à la direction 42 d'écoulement de l'air chaud dans le conduit annulaire.

Selon un autre mode de réalisation illustré sur la figure 14, les embouchures 100 débouchent au niveau de surfaces 106 sécantes avec la direction 42 d'écoulement de l'air chaud dans le conduit annulaire. Avantageusement, les surfaces 106 sont perpendiculaires à la direction 102 des conduits.

## Revendications

1. Nacelle d'aéronef comprenant une lèvre (34) prolongée par un conduit intérieur (36) formant une entrée d'air, un cadre avant (32) délimitant avec ladite lèvre (34) un conduit annulaire (40) dans lequel circule de l'air chaud ainsi qu'un panneau pour le traitement acoustique comportant de l'extérieur vers l'intérieur une couche acoustiquement résistive (44), au moins une structure alvéolaire (46) et une couche réflectrice (48) ainsi que des canaux (50) permettant de canaliser de l'air chaud avec chacun une entrée communiquant avec le conduit annulaire (40) et une sortie communiquant avec le conduit intérieur (36), **caractérisée en ce que** le panneau pour le traitement acoustique (30) est disposé à l'arrière du cadre avant (32) et relié audit cadre avant (32) par des moyens de liaison (76), **en ce que** ledit panneau pour le traitement acoustique (30) comprend, en amont des canaux (50), un canal annulaire (62) qui s'étend sur au moins une partie de la circonférence de la nacelle, au moins un conduit assurant la communication entre ledit canal annulaire (62) et le conduit annulaire (40) en amont et plusieurs canaux (50) débouchant dans ledit canal annulaire (62) en aval et **en ce que** au moins une cale (74) est disposée dans le canal annulaire (62), au droit de chaque moyen de liaison (76) assurant la liaison entre le cadre avant (32) et le panneau pour le traitement acoustique (30), pour limiter les risques d'écrasement.

2. Nacelle d'aéronef selon la revendication 1, **caractérisée en ce que** le cadre avant (32) comprend un bord (72) recourbé vers l'arrière plaqué à la paroi délimitant le canal annulaire (62) et **en ce qu'**au moins une cale (74) est disposée dans le canal annulaire( 62) au droit de chaque moyen (76) assurant la liaison entre le cadre avant (32) et le panneau pour le traitement acoustique (30).

3. Nacelle d'aéronef selon la revendication 1 ou 2, **caractérisée en ce que** le panneau comprend dans le canal annulaire (62) une bande de matière (78) qui s'étend sur au moins une partie de la circonférence comportant pour chaque moyen de liaison (76) un bossage (80) assurant la fonction de cale (74).

4. Nacelle d'aéronef selon l'une quelconque des revendications 1 à 3, **caractérisée en ce que** le conduit annulaire (62) s'étend sur toute la circonférence de la nacelle.

5. Nacelle d'aéronef selon l'une quelconque des revendications 1 à 4, **caractérisée en ce que** le conduit annulaire (62) a une section supérieure ou égale à la section d'un canal (50).

6. Nacelle d'aéronef selon la revendication 5, **caractérisée en ce que** le conduit annulaire (62) a une section trapézoïdal dans un plan longitudinal, la grande base étant orientée vers la couche acoustiquement résistive (44).

7. Nacelle d'aéronef selon l'une quelconque des revendications 1 à 6, **caractérisée en ce que** le conduit annulaire (62) comprend plusieurs entrées et plusieurs sorties, les entrées et les sorties n'étant pas alignées selon la direction longitudinale mais décalées selon la circonférence.

8. Nacelle d'aéronef selon l'une des revendications précédentes, **caractérisée en ce que** le conduit annulaire (62) et les canaux (50) sont délimités par une même paroi (52) mise en forme et plaquée contre la couche acoustiquement résistive.

## Patentansprüche

1. Gondel eines Luftfahrzeugs mit einem Wulst (34), der durch einen inneren Kanal (36) verlängert ist, der einen Lufteinlass bildet, mit einem vorderen Rahmen (32), der mit dem Wulst (34) eine ringförmige Leitung (40) begrenzt, in der Warmluft zirkuliert, und mit einer Platte für die Schallbehandlung, die von außen nach innen eine schalldämpfende Schicht (44), wenigstens eine Kammerstruktur (46) und eine reflektierende Schicht (48) ebenso wie Kanäle (50) aufweist, die es gestatten, Warmluft zu kanalisieren, und die jeweils einen in Verbindung mit der ringförmigen Leitung (40) stehenden Einlass und einen mit dem inneren Kanal (36) in Verbindung stehenden Auslass aufweisen, **dadurch gekennzeichnet, dass** die Platte für die Schallbehandlung (30) hinter dem vorderen Rahmen (32) angeordnet ist und mit dem vorderen Rahmen (32) über Verbindungsmittel (76) verbunden ist und dass die Platte für die Schallbehandlung (30) in Strömungsrichtung vor den Kanälen (50) einen ringförmigen Kanal (62) aufweist, der sich über wenigstens einen Teil des Umfangs der Gondel erstreckt, wobei stromaufwärts wenigstens eine Leitung die Verbindung zwischen dem ringförmigen Kanal (62) und der ringförmigen Leitung (40) gewährleistet und stromabwärts mehrere Kanäle (50) in den ringförmigen Kanal (62) münden, und dass wenigstens eine Abstützung (74) in dem ringförmigen Kanal (62) im Bereich von jedem, die Verbindung zwischen dem vorderen Rahmen (32) und der Platte für die Schallbehandlung (30) gewährleistenden Verbindungselement (76) angeordnet ist, um die Quetschgefahr zu begrenzen.

2. Gondel eines Luftfahrzeugs nach Anspruch 1, **dadurch gekennzeichnet, dass** der vordere Rahmen (32) einen nach hinten gebogenen Rand (72) aufweist, der an die Wand angesetzt ist, die den ringförmigen Kanal (62) begrenzt und dass wenigstens eine Abstützung (74) im ringförmigen Kanal (62) im Bereich von jedem Mittel (76) angeordnet ist, das die Verbindung zwischen dem vorderen Rahmen (32) und der Platte für die Schallbehandlung (30) gewährleistet.

3. Gondel eines Luftfahrzeugs nach Anspruch 1 oder 2, **dadurch gekennzeichnet, dass** die Platte im ringförmigen Kanal (62) ein Materialband (78) aufweist, das sich über wenigstens einen Teil des Umfangs erstreckt und das für jedes Verbindungselement (76) einen Befestigungsdom (80) aufweist, der die Funktion der Abstützung (74) gewährleistet.

4. Gondel eines Luftfahrzeugs nach einem der Ansprüche 1 bis 3, **dadurch gekennzeichnet, dass** sich die ringförmige Leitung (62) über den gesamten Umfang der Gondel erstreckt.

5. Gondel eines Luftfahrzeugs nach einem der Ansprüche 1 bis 4, **dadurch gekennzeichnet, dass** die ringförmige Leitung (62) einen Querschnitt aufweist, der größer gleich dem Querschnitt eines Kanals (50) ist.

6. Gondel eines Luftfahrzeugs nach Anspruch 5, **dadurch gekennzeichnet, dass** die ringförmige Leitung (62) in einer Längsebene einen trapezförmigen Querschnitt aufweist, wobei die lange Grundseite der schalldämpfenden Schicht (44) zugewandt ist.

7. Gondel eines Luftfahrzeugs nach einem der Ansprüche 1 bis 6, **dadurch gekennzeichnet, dass** die ringförmige Leitung (62) mehrere Einlässe und mehrere Auslässe aufweist, wobei die Einlässe und die Auslässe in Längsrichtung nicht aufeinander ausgerichtet sind, sondern in Umfangsrichtung versetzt sind.

8. Gondel eines Luftfahrzeugs nach einem der vorhergehenden Ansprüche, **dadurch gekennzeichnet, dass** die ringförmige Leitung (62) und die Kanäle (50) durch dieselbe Wand (52) begrenzt sind, die an die schalldämpfende Schicht angeformt und angesetzt ist.

## Claims

1. Aircraft nacelle comprising a lip (34) extended by an internal conduit (36) forming an air intake, a front frame (32) defining with said lip (34) an annular channel (40) through which hot air circulates, as well as a panel for acoustic treatment comprising from outside inwardly an acoustic resistive layer (44), at least one honeycomb structure (46) and a reflective layer (48) as well ducts (50) for channeling hot air with each duct having an inlet communicating with annular channel (40) and an outlet communicating with inner conduit (36), **characterized in that** the panel for acoustic treatment (30) is arranged a rearwardly front frame (32) and connected to said front frame (32) by connecting means (76), **in that** said panel for acoustic treatment (30) comprises, upstream from ducts (50), an annular channel (62) which extends over at least a portion of the nacelle circumference, at least one conduit providing communication between said annular channel (62) and upstream annular channel (40) and a plurality of ducts (50) opening into said downstream annular channel (62) and **in that** at least one wedge (74) is positioned in annular channel (62), with each connecting means (76) providing the connection between front frame (32) and the panel for acoustic treatment (30), for limiting the crushing risk.

2. Aircraft nacelle according to Claim 1, wherein the front frame (32) comprises a rearwardly bent edge (72) pressed onto the wall delimiting annular channel (62), and wherein at least one wedge (74) is arranged inside annular channel (62) in regard with each connecting means (76) providing the connection between front frame (32) and the panel for acoustic treatment (30).

3. Aircraft nacelle according to any of the Claims 1 or 2, wherein said panel comprises in the annular channel (62) a material web (78) which extends over at least a portion of the circumference having for each connecting means (76) embossment (80) which function as a wedge (74).

4. Aircraft nacelle according to any Claims 1 to 3, wherein the annular channel (62) extends over the entire nacelle circumference.

5. Aircraft nacelle according to any of the Claims 1 or 4, wherein the annular channel (62) has a cross-section greater than or equal to the section of one duct (50).

6. Aircraft nacelle according to Claim 5, wherein the annular channel (62) has a trapezoidal cross-section in a longitudinal plane, the large base being oriented toward acoustic resistive layer (44).

7. Aircraft nacelle according to any of the Claims 1 to 6, wherein the annular channel (62) comprises several inlets and several outlets, inlets and outlets being not aligned in the longitudinal direction but offset along the circumference.

8. Aircraft nacelle according to one of the preceding claims, wherein the annular channel (62) and ducts (50) are delimited by a common wall (52) shaped and pressed against the acoustic resistive layer.
